# EUROPÄISCHE PATENTSCHRIFT

(11) **EP 1 121 586 B1**
(45) Veröffentlichungstag und Bekanntmachung des Hinweises auf die Patenterteilung: **10.11.2004**
(21) Anmeldenummer: 99952310.3
(22) Anmeldetag: 05.08.1999
(51) Int. Cl.: G01N 25/72, G01N 21/89

(54) **VORRICHTUNG ZUM BERÜHRUNGSLOSEN DETEKTIEREN VON PRÜFKÖRPERN**
DEVICE FOR CONTACTLESS TESTING OF TEST BODIES
DISPOSITIF POUR EFFECTUER UN CONTROLE DE CORPS SANS CONTACT

(30) Priorität: 13.10.1998 DE 19846995
(43) Veröffentlichungstag der Anmeldung: 08.08.2001
(73) Patentinhaber: Fraunhofer-Gesellschaft zur Förderung der angewandten Forschung e.V., 80686 München (DE)
(72) Erfinder: MEINLSCHMIDT, Peter, D-38176 Wendeburg (DE); SEMBACH, Jörg, D-41189 Mönchengladbach (DE)
(86) Internationale Anmeldenummer: PCT/DE1999/002453
(87) Internationale Veröffentlichungsnummer: WO 2000/022423

(56) Entgegenhaltungen:
- EP-A- 0 813 055
- WO-A-94/19160
- DE-A- 19 720 461
- H.TRETOUT: "Composites, la thermographie ça marche en CND" MESURES. REGULATION AUTOMATISME, Bd. 51, Nr. 15, November 1986 (1986-11), Seiten 43-46, XP002125600 Paris
- PATENT ABSTRACTS OF JAPAN vol. 015, no. 041 (P-1160), 31. Januar 1991 (1991-01-31) & JP 02 278146 A (MITSUBISHI ELECTRIC CORP), 14. November 1990 (1990-11-14)

## Beschreibung

Die Erfindung betrifft eine Vorrichtung zum berührungslosen Detektieren von Struktur- und/oder Oberflächenfehlern großflächiger Körper, insbesondere plattenförmiger Materialien (nachfolgend "Prüfkörper"), mit einer Fördereinrichtung für den Prüfkörper, einer stationär mit Abstand von der Förderebene angeordneten, sich quer zur Förderrichtung erstreckenden, linien- oder streifenförmig auf die Förderebene abstrahlenden Wärmequelle, einer der Wärmequelle in Förderrichtung nachgeordneten, stationär mit Abstand von der Förderebene angeordneten, auf die Förderebene gerichteten Thermographiekamera und einem an die Thermographiekamera angeschlossenen Rechner mit Monitor, der Wärmebildmuster aufbaut.

Bei der Herstellung großflächiger homogener oder aus verschiedenen Komponenten zusammengesetzter Materialien kann es zu Lufteinschlüssen, Rissen oder Inhomogenitäten im Material selbst oder zwischen den einzelnen Komponenten kommen. Diese strukturellen Schwächen vermindern in der Regel die Haftfestigkeit und damit die Qualität des Produktes. Es ist daher wünschenswert, frühzeitig und möglichst im Laufe des Fertigungsprozesses diese Fehler oder Schwächen zu erkennen, um korrigierend in den Herstellungsprozeß eingreifen zu können.

Je nach Art und Umfang des zu untersuchenden Materials werden zur Zeit verschiedene Verfahren zur Erkennung von Materialschwächen verwendet:
- Punktuell messende Systeme wie z.B. Ultraschall, radiometrische, induktive oder kapazitive Methoden geben Auskunft über die Materialschwächen in einem kleinen Meßfeld. Um mit diesen Methoden eine 100% Kontrolle von großflächigem Material zu ermöglichen, müssen punktuell messende Verfahren zeitraubend über das gesamte Objekt geführt werden. Diese punktuell messenden Verfahren sind für eine 100% online Fertigungskontrolle in der Regel wegen des zeitaufwendigen Scannens der Probe nicht zu verwenden. Gleichzeitiges paralleles Betreiben mehrerer Geräte verkürzt in der Regel zwar die Meßzeit, macht aber die Meßeinrichtungen entsprechend teuer.
- Schnelle, flächenhaft messende Systeme sind für eine 100% Fertigungskontrolle wünschenswert. Die optische Inspektion der Oberfläche im sichtbaren Licht erlaubt es, z.B. Fehler der Oberflächenschicht zu detektieren. Interferometrische Meßsysteme, wie z.B. das Elektronische Speckle Muster Interferometer (ESPI) oder das Shear-ESPI können Fehler auch im Inneren von Materialproben ganzflächig vermessen. Sie sind aber wegen ihrer großen Empfindlichkeit gegen äußere Störeinflüsse nicht einfach und zuverlässig in den Produktionsprozeß zu integrieren. Mikro- oder Radiowellen wären zwar prinzipiell für solch einen Überwachungsprozeß geeignet, verlangen aber einen relativ hohen Aufwand zur Einhaltung der strengen Sicherheitsvorschriften im Umgang mit Strahlungsquellen.

Die DE 197 03 484 A1 offenbart ein Prüfverfahren, bei dem in einem Material oder Materialverbund innere Fehler detektiert werden, indem im zu untersuchenden Bereich ein Wärmestrom erzeugt wird, der an Fehlstellen gestört ist. Die dadurch entstehenden Verzerrungen des Oberflächentemperaturfeldes werden erfaßt und zur Fehlerkontrastierung ausgewertet. Die Empfindlichkeit auf kleinere und tiefer liegende innere Fehler wird durch eine optimierte Wärmeführung und durch Nutzung hochauflösender Meßeinrichtung zur Erfassung der örtlichen und zeitlichen Oberflächentemperaturverteilung erreicht.

Die DE 196 28 391 C1 offenbart eine Signalverarbeitungseinheit einer Vorrichtung zum photothermischen Prüfen einer Oberfläche eines Prüfkörpers. Vorgesehen ist eine Geschwindigkeitsmeßeinrichtung, mit der die Relativgeschwindigkeit eines Prüfkörpers in bezug auf den optischen Teil sowie einen dazu fest angeordneten Detektor bestimmbar ist. Mit dem dadurch gewonnenen Geschwindigkeitsmeßwert ist der zeitliche Verlauf von durch Anregungsstrahlung erzeugter induzierter Wärmestrahlung auf einen ruhenden Prüfbereich korrigierbar.

Die DE 197 20 461 A1 offenbart ein Verfahren sowie eine Vorrichtung zur Überprüfung der inneren Kühlstruktur einer Turbinenschaufel. Dabei wird von der zu prüfenden Turbinenschaufel ein Ausgangs-Thermographiebild mittels einer ersten Infrarot-Kamera aufgenommen. Anschließend wird die Turbinenschaufel mittels Einblasen von Heizluft in deren Kühlstruktur kurzzeitig aufgeheizt. Von der so aufgeheizten Turbinenschaufel wird dann ein Thermographiebild durch eine zweite Infrarot-Kamera aufgenommen. Die Infrarot-Thermographie-Karnera kann in einem Line-Scan-Modus arbeiten, also das Objekt zeilenweise abtasten. Der von der Kamera aufgezeichnete zeitliche Verlauf der Temperaturverteilung wird von einem Personalcomputer durch ein entsprechendes Auswerte- und Bildverarbeitungsprogramm online digitalisiert und davon jeweils das Ausgangs-Thermographiebild substrahiert. Diese Differenzbilder werden mit den Aufnahmen einer Referenzschaufel verglichen und bewertet.

Die eingangs beschriebene Vorrichtung ist offenbart in dem Aufsatz von H. Tretout: "Composites, la thermographie ça marche en CND" MESURES. REGULATION AUTOMATISME, Bd. 51, Nr. 15, November 1986 (1986-11), Seiten 43-46, XP002125600 Paris. Bei dieser Vorrichtung wird der Prüfkörper mit Hilfe einer nicht näher erläuterten Fördereinrichtung innerhalb einer lotrechten Ebene an einer horizontal abstrahlenden Wärmequelle und einer dieser nachgeordneten Thermographie-Zeilenkamera vorbeigefördert, die nur eine Kamerazeile aufweist.

Der Erfindung liegt die Aufgabe zugrunde, eine Vorrichtung zur Durchführung eines gegenüber den vorbekannten Verfahren verbesserten Verfahrens zu entwickeln.

Diese Aufgabe wird erfindungsgemäß durch folgende Merkmale gelöst:
- Die genannte Fördereinrichtung weist eine angenähert horizontale Förderebene und einen gegenüber dem zu fördernden Prüfkörper unterstützungsfreien Bereich auf;
- die Wärmequelle ist oberhalb der Förderebene über dem unterstützungsfreien Bereich angeordnet;
- die Thermographiekamera ist eine oberhalb der Förderebene angeordnete Flächenkamera, die mehrere, jeweils quer zur Förderrichtung und in Förderrichtung hintereinander angeordnete Kamerazeilen aufweist;
- der Rechner mit Monitor baut aus den von den aufeinander folgenden Kamerazeilen nacheinander aufgenommenen Informationen aus verschiedenen Tiefenebenen des Prüfkörpers stammende Wärmebilder auf.

Um eine Erwärmung der den Prüfkörper haltenden bzw. fördernden Einrichtung zu verhindern, wird erfindungsgemäß vorgesehen, daß der Prüfkörper nur außerhalb des Bereiches seiner Wärmebeaufschlagung abgestützt wird. Dies läßt sich vorrichtungsmäßig in einfacher Weise dadurch realisieren, daß die Fördereinrichtung aus zwei im Bereich der Wärmequelle in Förderrichtung voneinander beabstandeten Endlosförderern besteht.

Zur Anpassung des erfindungsgemäßen Inspektionsgerätes an unterschiedliche Prüfbedingungen ist es zweckmäßig, wenn Verstelleinrichtungen vorgesehen sind zur Veränderung des in Förderrichtung zu messenden Abstandes zwischen Wärmequelle und Thermographiekamera und/oder zur Veränderung der Fördergeschwindigkeit der Fördereinrichtung und/oder zur Abstandsveränderung der Wärmequelle von der zu beaufschlagenden Oberfläche des Prüfkörpers und/oder für die Leistung der Wärmequelle.

Mit dem erfindungsgemäßen thermographischen Inspektionsgerät können sowohl Defekte auf der Oberfläche großer plattenförmiger Materialien als auch oberflächennahe Fehler bis zu einer Tiefe von einigen Zentimetern mit großer Geschwindigkeit berührungslos und zerstörungsfrei detektiert werden. So läßt sich z. B. eine thermographische Aufnahme einer beschichteten Spanplatte herstellen, deren Oberfläche homogen um wenige Grad erwärmt wurde. Nach kurzer Wärmeeindringzeit läßt sich aus jeder einzelnen Zeile der Thermographie-Flächenkamera ein komplexes, kontrastreiches, aus verschiedenen Tiefenebenen des Prüfkörpers zusammengesetztes Wärmebildmuster auf der Prüfkörperoberfläche beobachten. Aus diesen Bildern lassen sich dann Rückschlüsse auf die Qualität der Verklebung sowie die damit einhergehende schlechte Haftfestigkeit des Materials ziehen.

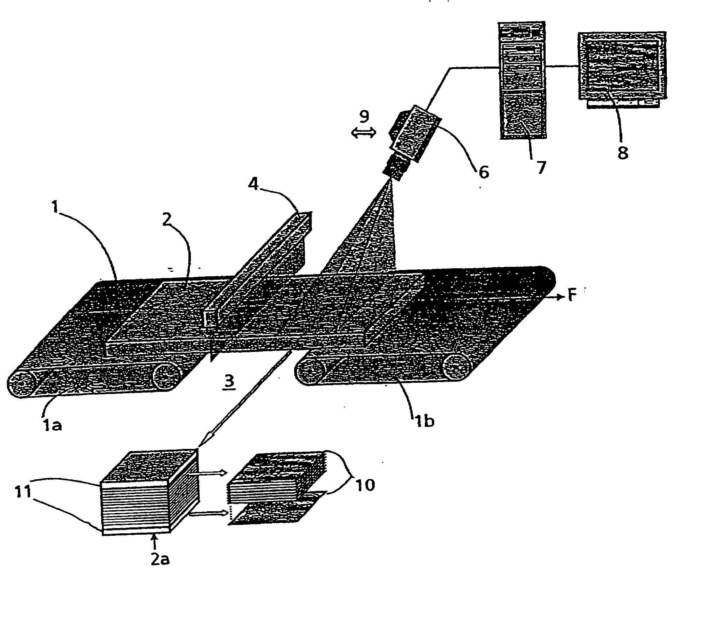

In der Zeichnung ist eine als Beispiel dienende Ausführungsform der Erfindung schaubildartig dargestellt.

Das dargestellte Gerät umfaßt eine Fördereinrichtung 1 für einen großflächigen, plattenförmigen Prüfkörper 2, bei dem es sich z.B. um eine beschichtete Spanplatte handeln kann. Die schematisch dargestellte Fördereinrichtung 1 setzt sich zusammen aus zwei in Förderrichtung F voneinander beabstandeten Endlosförderern 1a, 1b. Der lichte horizontale Abstand zwischen diesen beiden Endlosförderem 1a, 1b bildet gegenüber dem zu fördernden Prüfkörper 2 einen unterstützungsfreien Bereich 3, oberhalb von dem und oberhalb der Förderebene eine sich quer zur Förderrichtung F erstreckende Wärmequelle 4 stationär angeordnet ist, die linien- oder streifenförmig auf die Förderebene abstrahlt.

Der Wärmequelle 4 ist in Förderrichtung F eine Thermographiekamera nachgeordnet, die als Thermographie-Flächenkamera 6 ausgebildet ist. Die Thermographiekamera ist ebenfalls stationär oberhalb der Förderebene angeordnet und ist mit quer zur Förderrichtung F liegenden Kamerazeilen auf die Förderebene gerichtet. An die Thermographiekamera ist ein Computer angeschlossen, dessen Rechner 7 aus jeder Kamerazeile ein gesondertes Wärmebildmuster aufbaut, das auf einem Farbmonitor 8 betrachtet und auf einem PC ausgewertet werden kann.

In der Figur symbolisiert der eingezeichnete Doppelpfeil 9 eine Verstelleinrichtung zur Veränderung des in Förderrichtung F zu messenden Abstandes zwischen der Wärmequelle 4 und der Thermographiekamera 6.

Die Messung beruht darauf, daß sich die homogen in den Prüfkörper eingebrachte Wärme infolge von Defekten, Rissen und/oder Inhomogenitäten unterschiedlich schnell ausbreitet. Mit der Thermographiekamera können die sich nach einiger Zeit entsprechend der Wärmeleitung des Materials und der Tiefe des Defekts entwikkelnden unterschiedlichen Wärmebildmuster auf der Oberfläche beobachtet werden.

Die Fördergeschwindigkeit des Prüfkörpers 2, der Abstand zwischen der Wärmequelle 4 und der Oberfläche des Prüfkörpers 2 sowie die Leistung der Wärmequelle 4 bestimmen die gewünschte Energieeinbringung in den Prüfkörper. Dabei muß sich die Wärmequelle oberhalb des unterstützungsfreien Bereiches 3 befinden, um eine Erwärmung der Fördereinrichtung 1 zu verhindern.

Die eigentliche Inspektion des Prüfkörpers 2 erfolgt - in Förderrichtung F gesehen hinter der Wärmequelle 4 mit einer Thermographiekamera, die als komplette Flächenkamera (Focal Plane Array) ausgelegt ist und in solcher Höhe über dem zu vermessenden Prüfkörper 2 angebracht ist, daß mit der entsprechenden Optik die gewünschte Breite der Oberfläche des Prüfkörpers 2 abgebildet wird. Dabei sind die einzelnen Zeilen dieser Flächenkamera quer zur Förderrichtung F und in Förderrichtung F hintereinander angeordnet. Die zu untersuchende Tiefenschicht des Prüfkör pers 2 wird bestimmt durch die Abstandseinstellung der Thermographiekamera 6 gegenüber der Wärmequelle 4 in Verbindung mit der Geschwindigkeit der Fördereinrichtung 1. Befindet sich die Kamera dicht hinter der Wärmequelle 4, so zeichnet sie Wärmebilder oberflächennaher Schichten auf. Wird der Abstand der Kamera zur Wärmequelle 4 vergrößert, präsentiert das Wärmebildmuster der Prüfkörperoberfläche ein Signal aus tieferen Schichten, da die von der Wärmequelle 4 ausgestrahlte Wärme aufgrund des verlängerten Förderweges bereits tiefer in den Prüfkörper 2 eindringen konnte.

Durch die gleichförmige Bewegung des Prüfkörpers 2 unter der Flächenkamera 6 hindurch wird in dem angeschlossenen Computer 7, 8 aus jeder Kamerazeile ein gesondertes Bild des Prüfkörpers 2 aufgebaut. Hierdurch entstehen so viele Wärmebilder des Prüfkörpers, wie die Kamera Zeilen besitzt. Da jede Kamerazeile einen etwas entfernteren Bereich des Prüfkörpers 2 von der Wärmequelle 4 aufzeichnet, enthalten die jeweiligen Zeilenbilder Informationen aus verschiedenen Tiefenebenen 10 des Prüfkörpers 2, wie es im unteren Teil der Figur schaubildlich angedeutet ist. Der Ausschnitt 2a zeigt n-Zeilen 11, die Informationen aus verschiedenen Tiefenebenen 10 vermitteln.

Auf diese Weise ist es möglich, mit einer Thermographie-Flächenkamera 6 gleichzeitig das Signal aus verschiedenen Tiefen eines Prüfkörpers aufzuzeichnen.

## Patentansprüche

1. Vorrichtung zum berührungslosen Detektieren von Struktur- und/oder Oberflächenfehlem großflächiger Körper, insbesondere plattenförmiger Materialien (nachfolgend "Prüfkörper"), mit einer Fördereinrichtung (1) für den Prüfkörper (2), einer stationär mit Abstand von der Förderebene angeordneten, sich quer zur Förderrichtung (F) erstreckenden, linien- oder streifenförmig auf die Förderebene abstrahlenden Wärmequelle (4), einer der Wärmequelle (4) in Förderrichtung (F) nachgeordneten, stationär mit Abstand von der Förderebene angeordneten, auf die Förderebene gerichteten Thermographiekamera (6) und einem an die Thermographiekamera (6) angeschlossenen Rechner (7) mit Monitor (8), der Wärmebildmuster aufbaut, **gekennzeichnet durch** folgende Merkmale:
die genannte Fördereinrichtung (1) weist eine angenähert horizontale Förderebene und einen gegenüber dem zu fördernden Prüfkörper (2) unterstützungsfreien Bereich (3) auf;
- die Wärmequelle (4) ist oberhalb der Förderebene über dem unterstützungsfreien Bereich (3) angeordnet;
- die Thermographiekamera (6) ist eine oberhalb der Förderebene angeordnete Flächenkamera, die mehrere, jeweils quer zur Förderrichtung (F) und in Förderrichtung (F) hintereinander angeordnete Kamerazeilen aufweist;
- der Rechner (7) mit Monitor (8) baut aus den von den aufeinander folgenden Kamerazeilen nacheinander aufgenommenen Informationen aus verschiedenen Tiefenebenen des Prüfkörpers (2) stammende Wärmebilder auf.

2. Vorrichtung nach Anspruch 1, **dadurch gekennzeichnet, daß** die Fördereinrichtung (1) aus zwei im Bereich der Wärmequelle (4) in Förderrichtung (F) voneinander beabstandeten Endlosförderem (1 a, 1 b) besteht.

3. Vorrichtung nach Anspruch 1 oder 2, **gekennzeichnet durch** eine Verstelleinrichtung (9) zur Veränderung des in Förderrichtung (F) zu messenden Abstandes zwischen Wärmequelle (4) und Thermographiekamera (6).

4. Vorrichtung nach Anspruch 1, 2 oder 3, **gekennzeichnet durch** eine Verstelleinrichtung zur Veränderung der Fördergeschwindigkeit der Fördereinrichtung (1).

5. Vorrichtung nach einem der vorhergehenden Ansprüche, **gekennzeichnet durch** eine Verstelleinrichtung zur Veränderung des Abstandes der Wärmequelle (4) von der zu beaufschlagenden Oberfläche des Prüfkörpers (2).

6. Vorrichtung nach einem der vorhergehenden Ansprüche, **gekennzeichnet durch** eine Verstelleinrichtung für die Leistung der Wärmequelle (4).

## Claims

1. A device for the contactless testing of structural or surface errors of large-scale bodies, especially materials in the form of plates (referred to as "test bodies" in the following), with a conveyor device (1) for the test body (2), a stationary heat source (4) being positioned with a distance from the conveyor level and across the conveyor direction (F) and radiating in lines or stripes onto the conveyor level, a thermography camera (6) being positioned downstream of the heat source (4) in the conveyor direction (F) with a distance from the conveyor level, aimed towards the conveyor level, and a PC (7) being connected with the thermography camera (6) including a monitoring screen (8), which builds up heat image patterns,
**characterized by**:
- a before mentioned conveyor device (1) comprising an approximating horizontal conveyor level and an area (3) which is support-free in relation to the test body (2) to be conveyed;
- a heat source (4) positioned over the conveyor level above the support-free area (3);
- a thermography camera (6) being a wide-area camera positioned above the conveyor level, comprising multiple camera lines which are placed in line across as well as in parallel with the conveyor direction (F);
- a PC (7) with a monitoring screen (8) constructing heat images based on the various pieces of information capturing different levels of depth of the test body (2), which originate from the series of camera lines.

2. The device according to claim 1, **characterized in that** the conveyor device (1) consists of two endless conveyor belts (1a, 1b), which are positioned in the area of the heat source (4) in parallel with the conveyor direction (F) and with a distance from each other.

3. The device according to claim 1 or 2, **characterized in that** it comprises an adjustment device (9) to change the distance in relation to the conveyor direction (F) between heat source (4) and thermography camera (6).

4. The device according to claim 1, 2, or 3, **characterized in that** it comprises an adjustment device to change the conveyor speed of the conveyor device (1).

5. The device according to one of the preceding claims, **characterized in that** it comprises an adjustment device to change the distance of the heat source (4) from the surface of the test body which needs to be determined (2).

6. The device according to one of the preceding claims, **characterized in that** it comprises an adjustment device for the performance of the heat source (4).

## Revendications

1. Dispositif pour effectuer un contrôle sans contact de défauts de surface et/ou de structure de corps de grande surface, en particulier de matériaux en plaques (« échantillon », dans ce qui suit), équipé d'un convoyeur (1) pour l'échantillon (2), d'une source de chaleur (4) disposée de façon stationnaire à distance du plan de convoyage, s'étendant transversalement à la direction de convoyage (F), rayonnant selon des lignes ou des bandes sur le plan de convoyage, d'une caméra thermographique (6) disposée en aval de la source de chaleur (4) selon la direction de convoyage (F), disposée de façon stationnaire à distance du plan de convoyage, dirigée sur le plan de convoyage, et d'un ordinateur (7) équipé d'un moniteur (8), raccordé à la caméra thermographique (6), qui élabore des motifs d'image de chaleur,
**caractérisé en ce que**
- le convoyeur (1) présente un plan de convoyage approximativement horizontal et une zone sans support (3) de l'échantillon (2) à convoyer ;
- la source de chaleur (4) est disposée au-dessus de la zone sans support (3) ;
- la caméra thermographique (6) est une caméra matricielle disposée au-dessus du plan de convoyage, présentant plusieurs lignes de caméra disposées chaque fois transversalement à la direction de convoyage (F) et les unes après les autres dans la direction de convoyage (F) ;
- l'ordinateur (7) avec moniteur (8) élabore à partir des informations enregistrées les unes après les autres par les lignes de caméra se succédant des images de chaleur émanant de différents niveaux de profondeur de l'échantillon (2).

2. Dispositif selon la revendication 1,
**caractérisé en ce que**
le convoyeur (1) se compose de deux convoyeurs à bande (1a et 1b). écartés l'un de l'autre dans la zone de la source de chaleur (4) en direction de convoyage (F).

3. Dispositif selon la revendication 1 ou 2,
**caractérisé par**
un dispositif de réglage (9) pour modifier l'écartement à mesurer en direction de convoyage (F) entre la source de chaleur (4) et la caméra thermographique (6).

4. Dispositif selon la revendication 1, 2 ou 3,
**caractérisé par**
un dispositif de réglage pour modifier la vitesse de convoyage du convoyeur (1).

5. Dispositif selon l'une quelconque des revendications précédentes,
**caractérisé par**
un dispositif de réglage pour modifier la distance entre la source de chaleur (4) et la surface à influencer de l'échantillon (2).

6. Dispositif selon l'une quelconque des revendications précédentes,
**caractérisé par**
un dispositif de réglage de la puissance de la source de chaleur (4).
